# EUROPÄISCHE PATENTSCHRIFT

(11) **EP 0 725 739 B1**
(45) Veröffentlichungstag und Bekanntmachung des Hinweises auf die Patenterteilung: **30.12.1998**
(21) Anmeldenummer: 94930198.0
(22) Anmeldetag: 20.10.1994
(51) Int. Cl.: B60L 5/20, H01R 4/62

(54) **SCHLEIFKONTAKTELEMENT SOWIE VERFAHREN ZUR VERBINDUNG EINES ELEKTRISCHEN ANSCHLUSSLEITERS MIT EINEM SCHLEIFKONTAKTELEMENT**
RUBBING CONTACT COMPONENT AND PROCESS FOR CONNECTING AN ELECTRICAL CONNECTION LEAD TO A RUBBING CONTACT COMPONENT
ELEMENT DE CONTACT PAR FROTTEMENT ET PROCEDE DE CONNEXION D'UN CONDUCTEUR DE RACCORDEMENT A UN ELEMENT DE CONTACT PAR FROTTEMENT

(30) Priorität: 27.10.1993 DE 4336705
(43) Veröffentlichungstag der Anmeldung: 14.08.1996
(73) Patentinhaber: HOFFMANN & CO. ELEKTROKOHLE GESELLSCHAFT M.B.H., A-4823 Steeg (AT)
(72) Erfinder: SIESSL, Wolfgang, A-4801 Traunkirchen (AT); PILZ, Werner, A-4823 Steeg (AT)
(74) Vertreter: Glawe, Delfs, Moll & Partner
(86) Internationale Anmeldenummer: EP9403450
(87) Internationale Veröffentlichungsnummer: WO9511817

(56) Entgegenhaltungen:
- EP-A- 0 322 699
- DE-A- 2 608 921
- DE-B- 1 257 825
- DE-C- 941 548

## Beschreibung

Die Erfindung betrifft ein Schleifkontaktelement für Stromabnehmer von der im Oberbegriff des Anspruchs 1 angegebenen Art. Die Erfindung betrifft ferner ein Verfahren zur Verbindung eines Anschlußleiters mit einer Kohleleiste eines derartigen Schleifkontaktelementes.

Schleifleisten für Stromabnehmer bestehen aus einem Werkstoff, der einerseits elektrisch leitfähig sein muß und andererseits die für das Zusammenwirken mit dem Fahrdraht od.dgl. erforderlichen Kontakt- und Abriebeigenschaften aufweisen muß. Übliche Werkstoffe für Schleifleisten sind Kohle bzw. Graphit, Mischungen aus Kohle und Metall, insbesondere Kupfer, sowie für bestimmte Anwendungszwecke auch Sintermetall.

Der an der Kontaktstelle mit dem Fahrdraht abgenommene elektrische Strom muß über die Länge der Schleifleiste zu einer am Ende der Schleifleiste vorgesehenen Anschlußklemme od.dgl. weitergeleitet werden. Die Übertragung hoher Stromdichten durch das Material der Schleifleiste selbst kann mit hohen Verlusten und einer hohen thermischen Belastung der Schleifleiste verbunden sein. Deshalb wird die Schleifleiste in der Regel mit einem oder mehreren elektrischen Anschlußleitern in Form von Drähten, Litzen od.dgl. versehen, die sich über die Länge der Schleifleiste erstrecken und an der Unterseite der Schleifleiste oder in einer Ausnehmung innerhalb der Schleifleiste angeordnet sind. Für die Befestigung und elektrische Verbindung des Anschlußleiters mit der Schleifleiste gibt es verschiedene Möglichkeiten, z.B. kann der Anschlußleiter mit der Schleifleiste verpreßt werden, er kann mit ihr durch eine elektrisch leitfähige Klebschicht verklebt sein, oder es kann eine Kupferschicht od.dgl. galvanisch auf die Schleifleiste aufgebracht werden, in welche der Anschlußleiter eingebettet wird oder mit der der Anschlußleiter verlötet wird. Alle diese bekannten Befestigungs- und Verbindungsverfahren machen relativ aufwendige Bearbeitungsschritte bei der Herstellung des Stromabnehmers erforderlich.

Eine Kohleleiste der im Oberbegriff des Anspruchs 1 angegebenen Art ist aus EP-A-0 322 699 bekannt. Der Anschlußleiter hat hierbei die Form eines Metallgewebebandes oder einer Metallfolie und wird in eine flache Nut an der Unterseite der Kohleleiste eingepreßt.

Aus AT-B-209 376 ist es bekannt, zur kraftschlüssigen Verbindung einer Kohleleiste mit einer Metallfassung ein in Längsrichtung dehnbares und in Querrichtung elastisch kontrahierbares Gummielement im in Längsrichtung gedehnten Zustand in eine Ausnehmung der Kohleleiste einzusetzen und dann loszulassen, so daß es sich elastisch zwischen Kohleleiste und Metallfassung verklemmt.

DE-B-12 57 825 offenbart eine Kohleleiste, deren Anschlußleiter ein Metallgeflechtband ist, das zwischen der Kohleleiste und deren Träger angeordnet und mit beiden verklebt ist.

Aus DE-C-941 548 und DE-A-26 08 921 sind in Querrichtung elastisch komprimierbare leitfähige Elemente als Abschirmstreifen oder elektrisch leitende Einlagen zur Überbrückung von Stoßfugen bekannt.

Der Erfindung liegt die Aufgabe zugrunde, ein Schleifkontaktelement anzugeben, an dem in besonders einfacher Weise ein elektrischer Anschlußleiter befestigt ist, wobei eine sichere, großflächige, den Betriebsbeanspruchungen zuverlässig standhaltende Kontaktgabe zwischen dem Anschlußleiter und dem Material des Schleifkontaktelementes gewährleistet ist.

Die Aufgabe wird erfindungsgemäß durch das im Anspruch 1 angegebene Schleifkontaktelement und durch das im Anspruch 5 angegebene Verfahren gelöst. Die Unteransprüche beziehen sich auf vorteilhafte weitere Ausgestaltungen der Erfindung.

Bei dem erfindungsgemäßen Schleifkontaktelement wird der Anschlußleiter mit elastischer Vorspannung gegen die Wandung der es aufnehmenden Ausnehmung angepreßt, wodurch eine sichere, auch gegen betriebsbedingte Erschütterungen unempfindliche Kontaktgabe gewährleistet ist. Die Herstellung des Schleifkontaktelementes ist besonders einfach, da sie lediglich das Einsetzen des Anschlußleiters bzw. des ihn tragenden elastomeren Elementes unter Vorspannung in die Ausnehmung erfordert, wobei aber keine zusätzlichen Bearbeitungsschritte wie Kleben, Löten, Galvanisieren oder Verpressen erforderlich sind.

Die Erfindung wird anhand von Ausführungsbeispielen unter Bezugnahme auf die Zeichnung erläutert. Es zeigt:
Fig. 1 einen Querschnitt durch die Schleifleiste eines Stromabnehmers für elektrische Schienenfahrzeuge gemäß einer ersten Ausführungsform;
Fig. 2 einen Längsschnitt durch die Schleifleiste gemäß einer zweiten Ausführungsform.

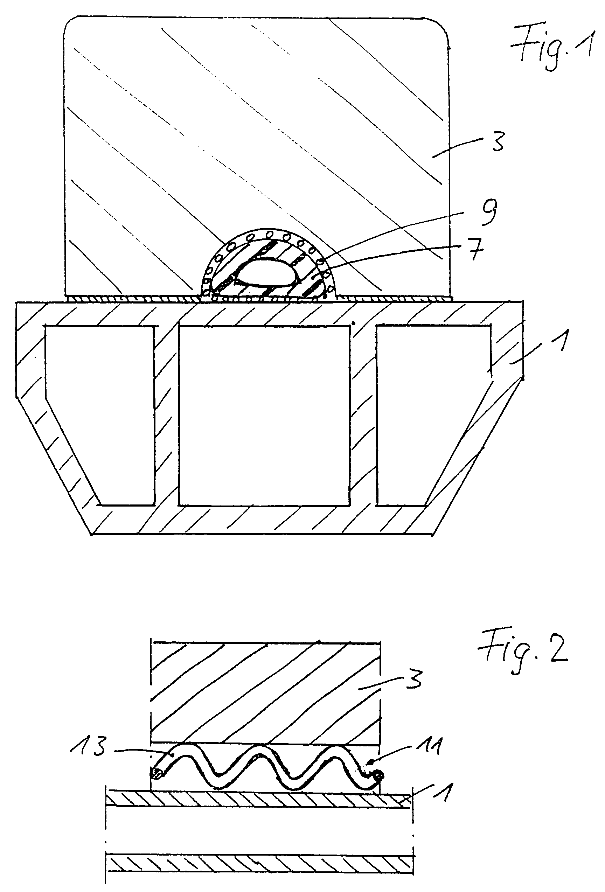

Gemäß Fig. 1 ist auf einem Träger 1, der aus Metall, wie Aluminium, oder auch aus Kunststoff bestehen kann, die eigentliche Schleifleiste 3 mittels einer Klebeschicht befestigt. Die Schleifleiste 3 besteht üblicherweise aus Kohle oder einer Kohle-Kupfermischung.

In einer halbkreisförmigen Nut an der Unterseite der Schleifleiste 3 ist ein langgestrecktes elastomeres Element 7 angeordnet, das an seiner Außenseite von einem elektrischen Leiter 9, vorzugsweise in Form eines Litzengeflechtes umgeben ist. Es können insbesondere handelsübliche Abschirmungsschläuche aus Metallitzengeflecht sein.

Das elastomere Element 7 kann, wie dargestellt, schlauchförmig sein und muß aus einem Material bestehen, das temperatur- und alterungsbeständig ist und auch bei längerer Betriebsbeanspruchung seine elastomeren Eigenschaften nicht ändert. Als besonders geeignet haben sich Schläuche aus Silikonkautschuk erwiesen.

Der Querschnitt des elastomeren Elementes 7 ist so bemessen, daß die Querabmessungen des elastomeren Elementes einschließlich des darauf angebrachten Anschlußleiters 9 im entspannten Zustand größer sind als die Querabmessungen des von der Ausnehmung der Schleifleiste 3 und der Oberseite des Trägers 1 gebildeten Aufnahmekanals. Das elastomere Element drückt deshalb durch seine Rückstellkraft den Anschlußleiter, d.h. das Metallitzengeflecht gegen die Wandung der Ausnehmung der Schleifleiste 3 und gegen die Oberfläche des Trägers 1 an.

Die Herstellung der Schleifleiste gemäß Fig. 1 erfolgt in der Weise, daß das elastomere Element 7 mit dem darauf angebrachten Anschlußleiter 9 in Längsrichtung gedehnt wird, wodurch es sich in Querrichtung kontrahiert. Unter Aufrechterhaltung der längsgerichteten Zugkraft wird das elastomere Element 7 vorzugsweise mit dem Anschlußleiter 9 in die Ausnehmung des Schleifkörpers 3 eingelegt und dieser dann mit dem Träger 1 verklebt. Nach Aushärten der Klebeverbindung wird das Anlegen der längsgerichteten Zugkraft auf das elastomere Element 7 beendet, wodurch sich dieses durch seine elastische Rückstellkraft in Längsrichtung kontrahiert und in Querrichtung expandiert, um die Anpreßkraft für den Anschlußleiter 9 zu erzeugen.

Gemäß Fig. 2 ist in eine nutförmige Ausnehmung 11 der auf den Träger 1 aufgeklebten Schleifleiste 3 ein schraubenförmig gewendelter Draht 13 als Anschlußleiter eingezogen. Der Durchmesser der Drahtwendel 13 im entspannten Zustand hat Übermaß gegenüber den Querabmessungen der Ausnehmung 11. Die Drahtwendel 13 wird in Längsrichtung gedehnt, in diesem Zustand in die Ausnehmung 11 eingezogen und dann entspannt, so daß sie in Längsrichtung kontrahiert und ihre Windungen sich unter Vorspannung gegen die Wandung der Ausnehmung 11 anlegen.

## Patentansprüche

1. Schleifkontaktelement für Stromabnehmer, mit einer Kohleleiste (3), einem mit dieser verbundenen Träger (1) und einem in Längsrichtung des Schleifkontaktelements verlaufenden Anschlußleiter (9, 13), wobei die Kohleleiste (3) eine in ihre Längsrichtung verlaufende Ausnehmung (11) aufweist, die entweder nutförmig und an ihrer offenen Seite vom Träger (1) abgeschlossen ist oder kanalförmig ist,
und wobei der Anschlußleiter (9, 13) in der Ausnehmung eingelagert ist und mit der von der Kohleleiste (3) und ggf. dem Träger (1) gebildeten Wandung der Ausnehmung (9, 13) in elektrischem Kontakt steht,
dadurch **gekennzeichnet,** daß der Anschlußleiter (9, 13) in seiner Längsrichtung elastisch dehnbar und dadurch in Querrichtung elastisch kontrahierbar ausgebildet ist,
daß die Querabmessungen des Anschlußleiters (9, 13) im entspannten elastischen Zustand Übermaß gegenüber den Querabmessungen der Ausnehmung (11) aufweisen,
und daß der Anschlußleiter (9, 13) derart mit elastischer Längsdehnungsvorspannung und entsprechender Querkontraktion in die Ausnehmung (11) eingesetzt ist, daß in ihm eine elastische Rückstellkraft in Längsrichtung und entsprechende Aufweitkraft in Querrichtung vorhanden ist, durch die der Anschlußleiter (9, 13) in Querrichtung gegen die von der Kohleleiste (3) und ggf. dem Träger (1) gebildete Wandung der Ausnehmung (11) angepreßt ist.

2. Schleifkontaktelement nach Anspruch 1, dadurch **gekennzeichnet,** daß der Anschlußleiter (9) flexibel ausgebildet und an der Außenseite eines in Längsrichtung elastisch dehnbaren und dadurch in Querrichtung elastisch kontrahierbaren elastomeren Elementes (7) angeordnet ist, das mit elastischer Dehnungsvorspannung in die Ausnehmung (11) eingesetzt ist und durch seine elastische Rückstellkraft den Anschlußleiter (9) in Querrichtung gegen die von der Kohleleiste (3) und ggf. dem Träger (1) gebildete Wandung der Ausnehmung anpreßt.

3. Schleifkontaktelement nach Anspruch 2, dadurch **gekennzeichnet,** daß das elastomere Element (7) ein Schlauch aus elastomerem Material, insbesondere aus Silikongummi, und der Anschlußleiter (9) ein den Schlauch umgebendes Litzengeflecht ist.

4. Schleifkontaktelement nach Anspruch 1, dadurch **gekennzeichnet,** daß der Anschlußleiter als in Längsrichtung elastisch dehnbare Drahtwendel (13) ausgebildet ist.

5. Verfahren zur Verbindung eines Anschlußleiters mit einer Kohleleiste eines Schleifkontaktelementes für Stromabnehmer, dadurch **gekennzeichnet,** daß ein in Längsrichtung elastisch dehnbarer und dadurch in Querrichtung elastisch kontrahierbarer Anschlußleiter (9, 13) im in Längsrichtung gedehnten und dadurch in Querrichtung kontrahierten Zustand in eine nut- oder kanalförmige Ausnehmung (11) der Kohleleiste (3) eingesetzt und dann, ggf. nach Verbinden der Kohleleiste mit einem die nutförmige Ausnehmung (11) abschließenden Träger (1), in Längsrichtung entspannt und dadurch in Querrichtung expandiert und zur elastischen Anlage an der Wand der Ausnehmung (11) gebracht wird.

6. Verfahren nach Anspruch 5, dadurch **gekennzeichnet,** daß ein flexibler Anschlußleiter (9) auf einem elastisch in Längsrichtung dehnbaren, elastomeren Element (7) angeordnet und das elastomere Element (7) mit dem Anschlußleiter (9) unter elastischer Längsdehnung in die Ausnehmung (11) der Kohleleiste (3) eingesetzt und dann entspannt wird.

7. Verfahren nach Anspruch 6, dadurch **gekennzeichnet,** daß als elastomeres Element (7) ein Schlauch aus elastomerem Material, insbesondere aus Silikongummi, und als Anschlußleiter (9) ein den Schlauch umgebendes Litzengeflecht verwendet wird.

## Claims

1. A sliding contact element for current collectors, with a carbon strip (3), a support (1) and a connecting lead (9,13) extending in the longitudinal direction of the sliding contact element, wherein the carbon strip (3) has a recess (11) which extends in its longitudinal direction and which is either groove-like and closed on its open side by the support (1) or is channel-like, and wherein the connecting lead (9,13) is incorporated in the recess and is in electrical contact with the wall of the connecting lead (9,13) [sic] formed by the carbon strip (3) and, optionally, the support (1), characterised in that the connecting lead (9,13) can expand elastically in its longitudinal direction and is thereby designed so that it can contract elastically in transverse direction, in that in the relaxed elastic state the transverse dimensions of the connecting lead (9,13) are in excess with respect to the transverse dimensions of the recess (11), and in that the connecting lead (9,13) is inserted into the recess (11) with elastic longitudinal expansion preloading and corresponding transverse contraction in such a way that in said lead an elastic restoring force is present in the longitudinal direction and a corresponding expanding force is present in the transverse direction, as a result of which the connecting lead (9,13) is pressed in the transverse direction against the wall of the recess (11) formed by the carbon strip (3) and, optionally, by the support (1).

2. A sliding contact element according to Claim 1, characterised in that the connecting lead (9) is flexible and is disposed on the outside of an elastomeric element (7) which can expand elastically in the longitudinal direction and thereby can contract elastically in the transverse direction, which element is inserted into the recess (11) with elastic expansion preloading and as a result of its elastic restoring force the connecting lead (9) is pressed in the transverse direction against the wall of the recess formed by the carbon strip (3) and, optionally, by the support (1).

3. A sliding contact element according to Claim 2, characterised in that the elastomeric element (7) is a tube of elastomeric material, in particular of silicone rubber, and the connecting lead (9) is a braided mesh surrounding the tube.

4. A sliding contact element according to Claim 1, characterised in that the connecting lead is in the form of a wire helix (13) which can expand elastically in the longitudinal direction.

5. A method of connecting a connecting lead to a carbon strip of a sliding contact element for current collectors, characterised in that a connecting lead (9,13), which can expand elastically in the longitudinal direction and thereby can contract elastically in the transverse direction, is inserted in a groove-like or channel-like recess (11) of the carbon strip (3) in the expanded state in the longitudinal direction and thereby in the contracted state in the transverse direction and then, optionally, after connecting the carbon strip to a support (1) closing the groove-like recess (11), is relaxed in the longitudinal direction and thereby expanded in the transverse direction, and is brought into elastic contact against the wall of the recess (11).

6. A method according to Claim 5, characterised in that a flexible connecting lead (9) is disposed on an elastomeric element (7) which can expand elastically in the longitudinal direction, and the elastomeric element (7) is inserted with the connecting lead (9) under elastic longitudinal expansion into the recess (11) of the carbon strip (3) and is then relaxed.

7. A method according to Claim 6, characterised in that a tube of elastomeric material, in particular of silicone rubber, is used as the elastomeric element (7), and a braided mesh surrounding the tube is used as the connecting lead (9).

## Revendications

1. Elément de contact par frottement pour balais conducteurs, comportant une baguette de charbon (3), un support (1) relié à celle-ci et un conducteur de raccordement (9, 13) s'étendant dans la direction longitudinale de l'élément de contact par frottement, la baguette de charbon (3) présentant un évidement (11) s'étendant dans sa direction longitudinale, qui est soit en forme de rainure et fermé par rapport au support (1) sur son côté ouvert, soit en forme de canal,
et le conducteur de raccordement (9, 13) étant monté dans l'évidement et étant en contact électrique avec la paroi de l'évidement (9, 13) formée par la baguette de charbon (3) et éventuellement le support (1),
caractérisé en ce que le conducteur de raccordement (9, 13) est extensible élastiquement dans sa direction longitudinale et de ce fait est contractable élastiquement dans sa direction transversale,
en ce que les dimensions transversales du conducteur de raccordement (9, 13) à l'état élastique détendu, présentent une surcote par rapport aux dimensions transversales de l'évidement (11),
et en ce que le conducteur de raccordement (9, 13) est inséré dans l'évidement (11) avec précontrainte d'extension longitudinale élastique et contraction transversale correspondante, de manière qu'il présente une force de rappel élastique dans la direction longitudinale et une force d'élargissement correspondante dans la direction transversale, par laquelle le conducteur de raccordement (9, 13) est pressé dans la direction transversale contre la paroi de l'évidement (11) formée par la baguette de charbon (3) et éventuellement par le support (1).

2. Elément de contact par frottement selon la revendication 1, caractérisé en ce que le conducteur de raccordement (9) est flexible et est disposé sur le côté extérieur d'un élément élastomère (7) élastiquement extensible dans la direction longitudinale et de ce fait contractable élastiquement dans la direction transversale, qui est inséré avec précontrainte d'extension élastique dans l'évidement (11) et presse, par sa force de rappel élastique, le conducteur de raccordement (9) dans la direction transversale, contre la paroi de l'évidement, formée par la baguette de charbon (3) et éventuellement par le support (1).

3. Elément de contact par frottement selon la revendication 2, caractérisé en ce que l'élément élastomère (7) est un tuyau en matière élastomère, en particulier en caoutchouc de silicone, et le conducteur de raccordement (9) est un treillis tressé entourant le tuyau.

4. Elément de contact par frottement selon la revendication 1, caractérisé en ce que le conducteur de raccordement est une hélice en fil métallique extensible élastiquement dans la direction longitudinale.

5. Procédé de connexion d'un conducteur de raccordement à une baguette de charbon d'un élément de contact par frottement pour balais conducteurs, caractérisé en ce qu'un conducteur de raccordement (9, 13) extensible élastiquement dans la direction longitudinale et de ce fait contractable élastiquement dans la direction transversale, est inséré, à l'état étendu dans la direction longitudinale et de ce fait contracté dans la direction transversale, dans un évidement (11) en forme de rainure ou de canal de la baguette de charbon (3), et ensuite, éventuellement après assemblage de la baguette de charbon avec un support (1) fermant l'évidement (11) en forme de rainure, est détendu dans la direction longitudinale et de ce fait expansé dans la direction transversale et est amené en application élastique contre la paroi de l'évidement (11).

6. Procéde selon la revendication 5, caractérisé en ce qu'un conducteur de raccordement (9) flexible est disposé sur un élément élastomère (7) extensible élastiquement dans la direction longitudinale, et l'élément élastomère (7) est inséré avec le conducteur de raccordement (9) sous extension longitudinale élastique dans l'évidement (11) de la baguette de charbon (3) et est ensuite détendu.

7. Procédé selon la revendication 6, caractérisé en ce qu'on utilise à titre d'élément élastomère (7) un tuyau en matière élastomère en particulier en caoutchouc de silicone, et à titre de conducteur de raccordement (9) un treillis tressé qui entoure le tuyau.
